Europäisches Patentamt

(19) European Patent Office

Office européen des brevets

(11) Publication number: **0 396 970**
**A2**

## (12) EUROPEAN PATENT APPLICATION

(21) Application number: **90107969.9**

(22) Date of filing: **26.04.90**

(51) Int. Cl.5: **H04J 3/06**

(30) Priority: **10.05.89 GB 8910777**

(43) Date of publication of application:
**14.11.90 Bulletin 90/46**

(84) Designated Contracting States:
**DE FR GB IT**

(71) Applicant: **STORNO A/S**
**Artillerivej 126**
**DK-2300 Copenhagen S(DK)**

(72) Inventor: **Vilhelmsen, Tom**
**Isefjordsvej 21**
**DK-4300 Holbaek(DK)**

(74) Representative: **Dunlop, Hugh Christopher et al**
**Motorola European Intellectual Property Operations Jays Close Viables Industrial Estate**
**Basingstoke, Hampshire RG22 4PD(GB)**

(54) **Radio demodulator circuit.**

(57) This invention relates to a circuit (13) for a radio, particularly a radio transceiver, suitable for implementation in gatearray or other integrated technology. In one aspect, the circuit comprises first means (102) for synchronising transmission timing to the timing of received radio signals (300) and second means (TRACKEN) for synchronising the first means to a clock (106,302) during periods between said received radio signals, thereby to facilitate synchronisation of the first means to the next radio signal to be received. In another aspect, means (72-76) are provided for monitoring the circuit inputs, to cause a read operation only when there is a change of input.

The invention also provides a digital frequency multiplier (120) and a demodulator circuit (100) including such a frequency multiplier.

*FIG.2*

## Radio Demodulator Circuit

### Background of the Invention

This invention relates to a circuit for a two-way radio incorporating features of demodulation of a received signal (such as an FSK signal) and/or frame detect, i.e. detection of a bit sequence in a received signal indicative of commencement of a frame/telegram and/or synchronisation to an incoming bit stream. The circuit is suitable for use in land mobile radio systems such as the United Kingdom MPT 1317/1327 "Band 3" system. The invention is, however, more widely applicable and useful wherever portability demands minimizing of size and weight, for example in pagers.

### Summary of the Prior Art

In the MPT 1317 two-way land mobile radio system, as in many digital radio systems, a radio transmission (whether from base station or subscriber unit) commences with a preamble, comprising a series of bit reversals, followed by a synchronisation word ("sync" or "frame" word) comprising a predetermined sequence of bits. The signal is typically FSK modulated. A receiver radio has the task of demodulating this signal, detecting the frame word and synchronising thereto. Accurate synchronisation to the frame word is important in order to correctly time transmissions in response to the received signal.

Two-way radios are known, e.g. the "Saber" (trade mark) radio manufactured by Motorola Inc., in which the demodulation and frame detection are carried out in software in a microprocessor. Such an implementation places a heavy burden on the microprocessor, with the result that time-critical functions can collide, resulting in degradation of the radio's performance.

Custom integrated circuits are known, such as the FX429 (trade mark) manufactured by CML Semiconductor Products, which perform the operations of demodulation and frame detection, but these are bulky (by present standards of circuit integration and present expectations of size in radios), expensive and slow to switch from transmit mode to receive mode. Generally these circuits comprise an analog demodulator, phase-locked loop and low-pass filter, and perform digital frame detection.

A versatile, inexpensive and compact form of digital circuitry is available in the form of gatearray technology. It is an object of the present invention to devise a digital circuit for a two-way radio which performs some of the time-critical functions necessary for the operation of such a radio, whereby such a circuit can be implemented in gatearray technology, or other integrated circuit technology, thereby providing for a compact and/or generally improved radio.

### Summary of the Invention

According to a first aspect of the present invention, there is provided a radio transceiver comprising first means for synchronising transmission timing to the timing of received radio signals and second means for synchronising the first means to a clock during periods between said received radio signals, thereby to facilitate synchronisation of the first means to the next radio signal to be received.

In this manner, the radio transceiver is very quick to synchronise to a new received signal. For example, in the MPT1327 system, when a radio needs to transfer from receive to transmit, a prior art sync unit needs 16 reversals on input (approx 13 milliseconds - 16 X 833 microseconds) to make the new synchronisation. By contrast, in at least the preferred embodiment of the present invention, the circuit of the invention switches of the frame detect unit and locks to the system clock (using a "track enable" function). In this case, the only loss of synchronisation is the difference between the base station crystal and the radio crystal. This difference is very small - it would typically take 30 seconds to go out of synchronisation. Therefore there is in fact no need to synchronise again with the next incoming preamble. The implementation of this aspect of the invention is facilitated by the use of a purely digital phase locked loop for the synchronisation unit.

According to a second aspect of the present invention, there is provided a digital hardware gatearray for a radio transceiver, comprising digital frame detection circuitry for detecting a received signal frame, digital synchronisation circuitry for synchronising the timing of operations of the gatearray to the received signal and digital demodulation circuitry for demodulating the received signal to provide a demodulated digital signal. It will be understood that the term "gatearray" is intended to include multiple-gate digital circuitry in discrete integrated form or integrated with other circuitry such as a microprocessor.

The invention in its second aspect allows for a compact construction for the overall radio with the further advantages of low noise, low cost and current saving. It allows the radio's microprocessor to stay off until the frame sync. word is received. It provides a faster response to interrupts and avoids collision of time critical functions. It is very simple to change the frame sync. pattern that the gatearray looks for.

According to a third aspect of the present invention, there is provided a digital frequency multiplier for multiplying the frequency of a digital signal by an integer number (N), comprising a pulse length counter for measuring the time (T) between two transitions of the signal in terms of pulses of a clock, means for dividing the measured time by the integer number (N), means for storing a digital representation of the integer part (I) of the result of the division, means for storing a digital representation of the remainder part (R) of the result, and means for generating N output pulses having a total duration equal to T by generating R pulses, each having a length of I + 1 pulses of the clock, and N-R pulses, each having a length of I pulses of the clock.

The provision of a frequency multiplier in the demodulator part of a radio transceiver facilitates the achievement of a high signal-to-noise ratio. In order to implement a demodulator in digital hardware for use in gatearray or other integrated technology, a digital frequency multiplier is necessary. The present invention, in its third aspect, provides such a digital frequency multiplier.

Where one or more data lines are to be provided in parts of the radio where they may interfere with the radio frequency circuits, it is very important that any logic circuitry does not make noise in receive and transmit modes. For example, if a circuit is provided having inputs which are clocked into a microprocessor via synchronous clock and data lines and if these were scanned for, e.g. 10ms, then the clock lines would make an unacceptable noise.

According to a fourth aspect of the present invention, there is provided a radio comprising:

a first part, a second part and screening means providing radio isolation between said parts, the first part comprising a processor device and at least one discrete circuit, and the second part comprising radio circuitry;

at least one data transfer line for transferring data between the processor device, said discrete circuit and the second part of the radio, the radio circuitry of the second part being sensitive to transfer of data on said data transfer line;

control input means for enabling a user of the radio to control the operation thereof, said control input means being connected to the discrete circuit for communication with the processor device through the discrete circuit,

the discrete circuit comprising means for monitoring the control input means and informing the processor device that a change in the control input means has occurred and

the processor device having means for extracting data from the discrete circuit via said at least one data transfer line only when so informed, whereby the data transfer line is inactive at other times, so as not to interfere with the radio circuitry.

It is preferred that the discrete circuit, which is preferably a gatearray, is arranged to clock data in in parallel, and to clock data out in serial.

In the preferred embodiment, a synchronous bus (clock and data plus Chip Select In and Chip Select Out) is used all over the radio to load up a synthesiser, a front module etc. It is this bus which gives the potential for noise problems. Noise problems are alleviated by the invention in its fourth aspect. The means for informing the processor of the change in input (the "EVENT" line) tells the microprocessor when one of the inputs changes its state (e.g. push to talk is pushed). The radio's microprocessor only reads data from the discrete circuit (the gatearray) when EVENT is low. Then the microprocessor clocks all available data from the gatearray into the microprocessor. This releases the microprocessor from polling inputs, which is very noisy. Without this feature, the inputs would have to be put on the microprocessor, so as not to clock an external device (the gatearray). Without this feature, it would therefore not be possible to use gatearray technology for the present invention in its other aspects.

It is preferred that the gatearray comprises a parallel-to-serial register and a serial-to-parallel register. These provide for input and output expansion, which means that the time between interrupt by the gatearray can be increased eightfold (in the case of eight-bit registers). The gatearray preferably has the facility to alternatively pass bits one-by-one at the request of the microprocessor.

Brief Description of the Drawings

Figure 1 is an overall hardware diagram of a radio controller incorporating the invention.

Figure 2 is an overall diagram of a gatearray in accordance with the invention.

Figure 3 is a diagram of a part of the input/output expand unit of Figure 2, showing the EVENT function.

Figure 4 is a block diagram of the asynchronous demodulator of Figure 2.

Figure 5 is a diagram of a frequency multiplier of the asynchronous demodulator of Figure 4

Figure 6 is a diagram of the synchronisation unit shown in Figure 2, and

Figure 7 is a diagram of the frame detect unit of Figure 2

Detailed Description of a Preferred Embodiment

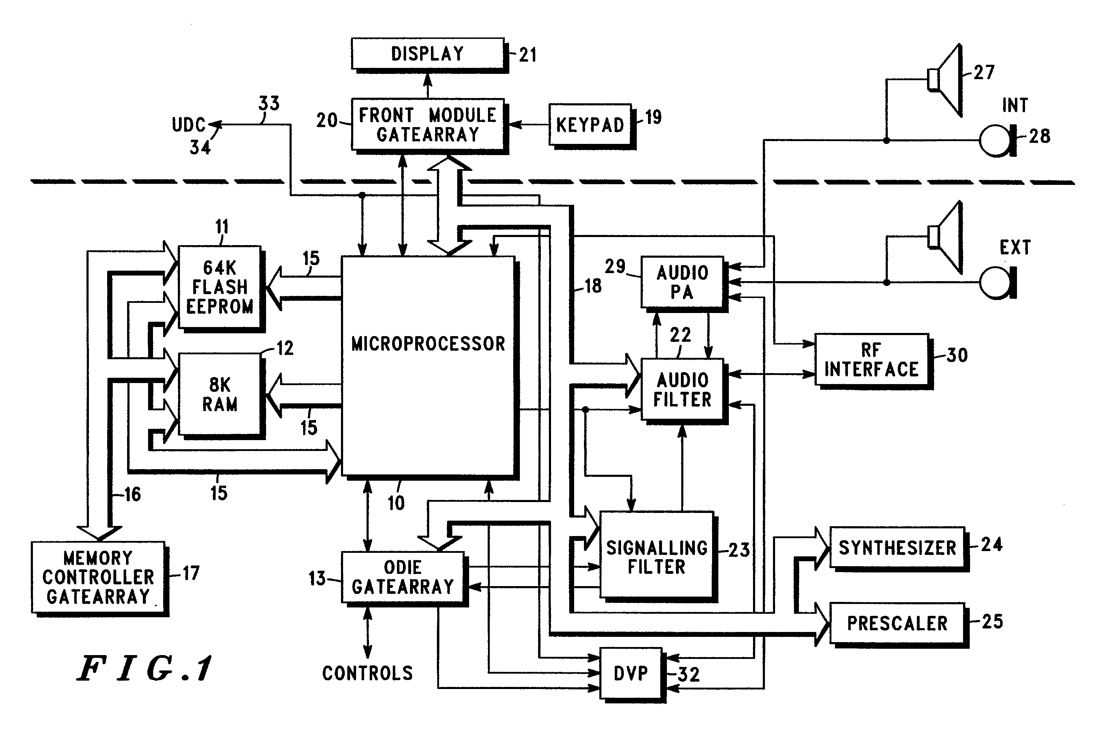

Referring to Figure 1, there is shown a radio controller for a two-way radio particularly intended for use on a trunked radio system. The controller comprises a microprocessor 10, preferably of the type 68HC11A8 manufactured by Motorola Inc. Connected to the microprocessor 10 is a 64K flash EEPROM memory 11, an 8K RAM memory 12 and a gatearray 13 in accordance with the present invention, further details of which will be described below. The gatearray 13 will hereafter be referred to as the ODIE gatearray for simplicity. The memories 11 and 12 are connected to the microprocessor by data buses 15. Connected to the memories 11 and 12 via an address bus 16 is a memory controller gatearray 17. This gatearray provides sequential tone decoding and private line (PL) decoding. These decoders run at 230.4 kHz, performing hardware detection of the sequential and PL tones. The gatearray 17 also performs an interface function between the microprocessor 10 and the EEPROM and RAM by means of a memory expand circuit. The gatearray 17 will hereafter be referred to as the SNIF gatearray.

A synchronous bus 18, comprising data, clock and chip enable lines, connects the microprocessor 10 to a display 21 (with display driver) and keypad 19 via front module gatearray 20, to an audio filter 22, a signalling filter (SFIC) 23, a synthesizer 24 and a prescaler 25. A loudspeaker 27 and a microphone 28 are connected to the audio filter 22 via audio power amplifier 29 and the microprocessor 10 and audio filter 22 are connected to an RF interface 30. A digital voice privacy circuit 32 is provided, connected to the microprocessor 10, the ODIE gatearray 13, the audio filter and amplifier 22 and 29 and an asynchronous UDC bus 33. Various controls (not shown) are provided, connected to the ODIE gatearray 13. The controls include channel selectors, a push-to-talk (PTT) button and a private line enable/disable button.

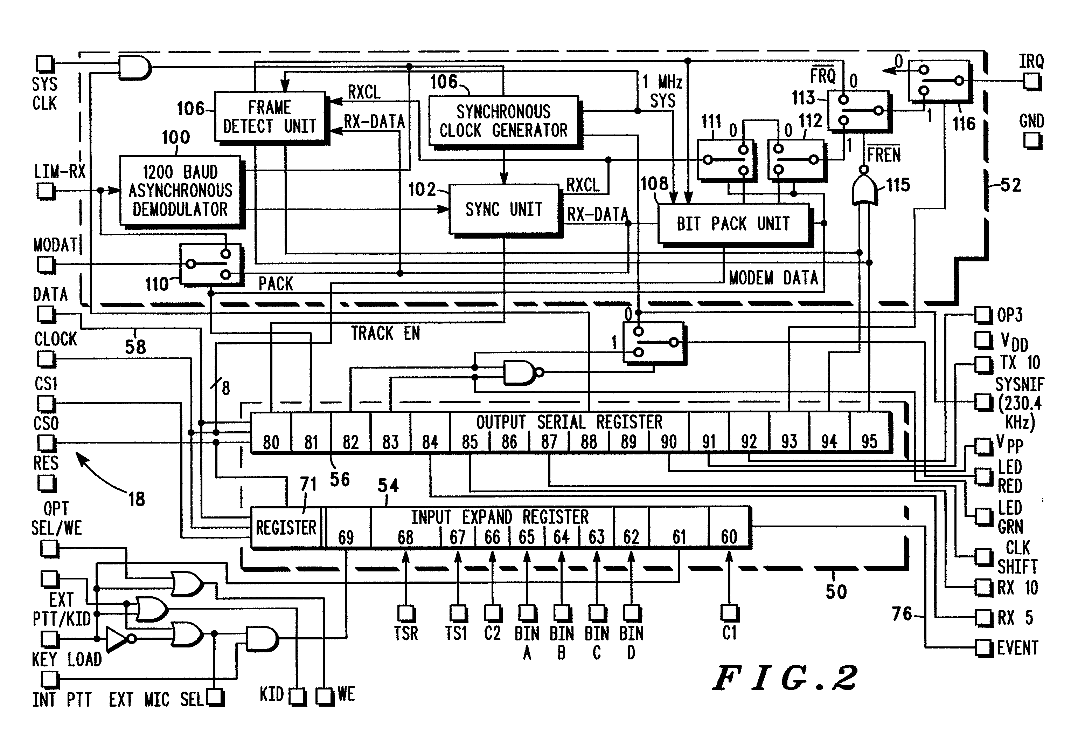

Referring to Figure 2, there is shown an overall block diagram of the ODIE gatearray 13 in accordance with the invention. The ODIE gatearray has 36 inputs/outputs, which are designated in Table 1, starting at the top left hand corner of Figure 2 and proceeding anticlockwise.

## Table 1

| Pin Name | Description |
| --- | --- |
| SYSCLK | Input, SYStem CLocK to ODIE - 7.372800MHz. |

| | |
|---|---|
| LIMRX | Input, LIMited RX signal. |
| MODAT | Output, MOdem DATa. |
| DATA | Bi-directional data line 58 to the synchronous bus 18. |
| CLOCK | Input, clock line to the synchronous bus 18. |
| CSI | Input, Chip Select Input (for input expand). |
| CSO | Input, Chip Select Output (for output expand). |
| RES | RESet signal, Input. |
| OPT SEL/WE | Input, Option Select/Write Enable. |
| EXT PTT/KID | Input, External Push-to-talk/key insert data. |
| KEY LOAD | Input, Key load. |
| INT PTT | Input*, Internal Push-to-talk. |
| EXT MIC SEL | Output, External Microphone Select. |
| KID | Output, Key Insert Data, to DVP logic. |
| WE | Output, Write enable to DVP logic. |
| TSR | Input*, Toggle Switch Right. |
| TSL | Input*, Toggle Switch Left. |
| C2 | Input*. |
| BINA | Input*, Binary Switch A. |
| BINB | Input*, Binary Switch B. |
| BINC | Input*, Binary Switch C. |
| BIND | Input*, Binary Switch D. |
| C1 | Input*. |
| EVENT | Output. |
| RX5 | Output. |
| RX10 | Output. |
| CLK SHIFT | Output, Clock Shift to avoid selfquieting. |
| LED GREEN | Output, LED Green. |
| LED RED | Output, LED Red. |
| VPP | Output, program enable to EEFLASH. |
| SYSNIF | Output, SYstem clock to SNIF. 230.4 KHz. |

| TX10 | Output. |
| VDD | 5 Volt Supply. |
| OP3 | Output. |
| GND | ground |
| IRQ | Output, Interrupt ReQuest. |

* These inputs are derived from various buttons/switches on the front panel or elsewhere on the radio. The remaining inputs listed above are inputs to the gatearray which are internal to the radio, or only accessible during manufacture or servicing. Typically the binary switches A to D are used for channel selecting, the switch TSR/TSL is used for private line selection and the buttons C1 and C2 are used for other functions such as mode selection.

The ODIE comprises two principal parts, an input/output expand unit 50 and a modem 52. Figure 2 shows other standard circuit components, which need not be described in detail here.

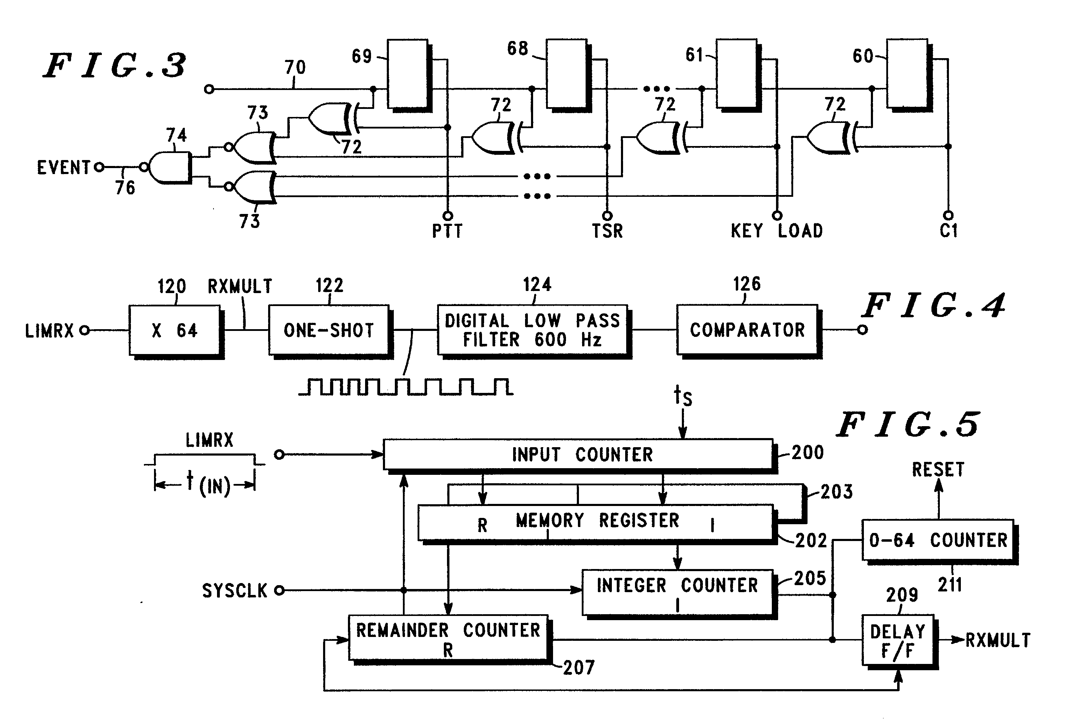

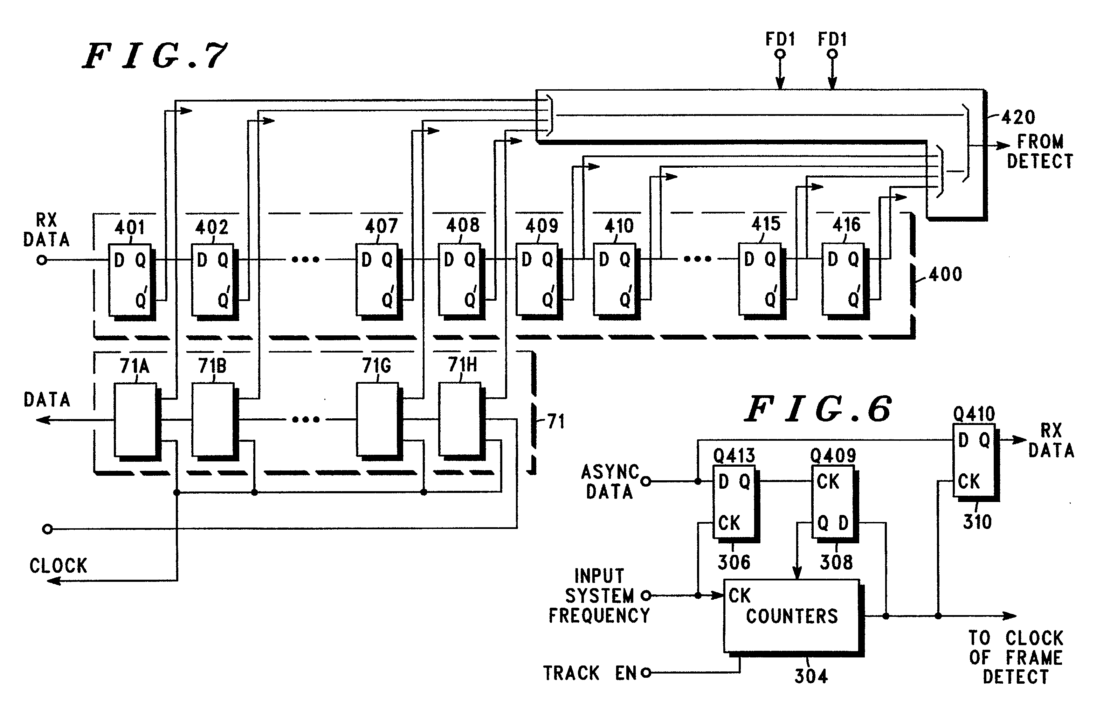

Referring to the input/output expand unit 50, this unit comprises an input serial register 54 and an output serial register 56. The input register comprises 10 serially connected flip-flops 60-69, arranged for shifting of data from right to left in the figure. The flip-flops receive signals on their DSC inputs from the input pins of the gatearray, as shown in the figure. Flip-flop 69 receives the PTT input. The serial register 54 is shown in greater detail in Figure 3, which for simplicity, only shows flip-flops 60, 61, 68 and 69. The output 70 of flip-flop 69 passes to a further 8-bit serial data register 71, shown in Figure 7, which will be described in further detail below. Register 71 serves a function in the input expand register 54 as well as in the bit pack unit 108 of modem 52, i.e. the two elements are physically implemented in the same register 71, which is described below, and for this reason, an 8-bit wide bus 72 is shown connecting these elements on Figure 2. The output of register 71 leads to the two-way data bus 58 of the gatearray. All of the inputs of flip-flops 60 to 69 are gated via exclusive OR gates 72, NOR gates 73 and NAND gate 74, to provide an EVENT signal 76, which is shown on Figure 2 as being an output of the gatearray.

EVENT signal 76 passes to the PE0 input of microprocessor 10. That input is a byte on the microprocessor memory map. The effect of this arrangement is that whenever there is a change in any one of the inputs PTT, TSR ... C1, EVENT goes low and the corresponding PE0 byte is read by the microprocessor, initiating a read operation of the data line 58 by the microprocessor. Thus, the noisy, high frequency read operation is only carried out when there is a change in input status.

In this manner, means are provided for monitoring the control inputs and informing the microprocessor that a change in a control input has occurred, wherein the processor extracts data from the gatearray via the asynchronous bus only when so informed. The synchronous bus is inactive at other times, so as not to interfere with the radio circuitry.

The output expand register 56 of Figure 2 comprises 16 flip-flops of the master-slave type, arranged to clock data serially from left to right in the figure. The flip-flops 80 to 94 are designated in accordance with Table 2.

EP 0 396 970 A2

Table 2

| 80 | Track enable | Enables the tracking of the phase-locked-loop. |
|----|--------------|-----------------------------------------------|
| 81 | Pack | Enables the bit pack unit |
| 82 | LED red | General purpose output |
| 83 | LED green | General purpose output |
| 84 | RX5 | General purpose output |
| 85 | RX10 | General purpose output |
| 86 | X | don't care bit |
| 87 | clock shift | System clock shift |
| 88 | modem enable | Enables the modem |
| 89 | test mode | Enables the test mode |
| 90 | Vpp | General purpose output |
| 91 | TX10 | General purpose output |
| 92 | OP3 | General purpose output |
| 93 | IE | Interrupt enable |
| 94 | FD0 | Frame detect 0 |
| 95 | FD1 | Frame detect 1 |

The track enable, pack and modem enable bits 80, 81 and 87 respectively serve to control modes of operation of the ODIE gatearray, as will be explained below. The test mode bit 88 switches the entire gatearray into a test mode, by switching various 2-way switches incorporated in the gatearray. This mode will not be explained in detail as one skilled in the art can readily devise test procedures. The remaining flip-flops of the output expand register 56 provide signals to other parts of the ODIE gatearray, or provide outputs, all as shown in Figure 2. If LEDR and LEDG are high, the pin LEDR = SYSNIF (230.4 kHz). This feature is used for testing. When loading the output expand register, the OP3 will change state. The output is stable when CS0 is high, or when CLOCK and CS0 are both low.

The input of the output expand register 56 is the two-way data bus 58 of the gatearray. The register 56 serves to receive serial data from this bus, and on receipt of a signal from CS0, it changes its states by means of a single clock signal to the slaves of the 16 master-slave flip-flops, and provides its various output data bits simultaneously.

Referring now to the modem part 52 of the ODIE, this is shown in Figure 2 as comprising a 1200 baud asynchronous demodulator 100, a synchronization unit 102, a frame detect unit 104, a synchronization clock generator 106, a bit pack unit 108 and various 2-way switches 110 to 114. In broad terms, the asynchronous demodulator 100 receives an FFSK signal LIMRX from the signalling filter 23 (Figure 1). The two-fold functions of the modem 52 are (a) to demodulate this signal, synchronize the sync clock generator 106 with this signal, and pass the demodulated data to the data output 58 (via bit pack unit 108 and register 71), and (b) to detect a frame word at the beginning of a telegram and provide an interrupt signal on IRQ output when this is detected.

Figure 4 shows a block diagram of the asynchronous demodulator 100 of Figure 2. The demodulator comprises a digital frequency multiplier 120, a one-shot 122, a digital low pass filter 124 and a comparator 126. The frequency multiplier 120 receives the FFSK signal LIMRX from the signalling filter 23. This is a 1200 baud signal comprising 1200 HZ and 1800 HZ components. The frequency multiplier 120, which is described in more detail with reference to Figure 5, multiplies the frequency of LIMRX by 64 to provide the signal RXMULT. Other multiplication factors could be used but the factor 64 is chosen to keep the system clock frequency reasonably low. The chosen system clock frequency is 7.3728 MHz. A multiplication factor of 16 could be used, but for the same quantization error, a four-fold increase in system clock frequency would be necessary. The frequency multiplier is necessary to achieve an acceptable signal-to-noise ratio. The signal from frequency multiplier 120 is fed to the one-shot 122, which, for each rising edge of the input signal gives a fixed length output pulse. The resulting signal is shown in the figure. In the signal shown, there is a transition from 1800 Hz to 1200 Hz, with a corresponding increase in the periods between the fixed length pulses. The pulse length from the one-shot is set such that for a LIMRX signal of 1500 Hz, the signal from the one-shot has high and low periods of equal average duration. The manner in which this is achieved is as follows.

It is necessary for the period of the one-shot to be precise, and it is not sufficient for it merely to be an integer number of counts of the system clock SYSCLK, otherwise the up/down counter 124 would drift up or

7

down, depending upon whether the period of the one-shot is too high or too low. For the first three edges of RXMULT, the one-shot is allowed to run for 19 periods of the system clock. For the next 13 counts of RXMULT, the one-shot runs for 18 counts of the system clock. The average period of the one-shot is therefore 18.19. This method of defining the period of the one-shot gives the necessary accuracy.

The signal from the one-shot is fed to the digital low-pass filter 124, which comprises an up/down counter. The counter counts up during the high periods of its input signal and down during the low periods. As a result, the counter progressively counts up over a period of several cycles of RXMULT, when LIMRX is 1800 Hz, and progressively counts down over several cycles of RXMULT when LIMRX is 1200 Hz. The count value of the up/down counter would remain approximately constant for an LIMRX signal of 1500 Hz. The up/down counter is a 10-bit counter. The comparator 126 provides a logic 1 when the count value of the up/down counter exceeds 600, and a logic 0 when the count value falls below 400. The count rate of the up/down counter is 7.3728 MHz. Gating means are provided to stop the up/down counter if it counts to 1024 (all 1's) or counts down to 0. If the state of all 1's is reached, the counter stops counting up, and only counts down until such time as the lower count level (400) is passed, whereupon normal counting continues. The reverse procedure occurs if the count level drops to 0. In this manner, if there is an error on the input signal, the counter does not count round from 1024 to 0 (or vice versa), which would otherwise result in an erroneous output.

Referring to Figure 5, the digital frequency multiplier 120 is shown in greater detail. The multiplier comprises an input counter 200, a memory register 202 (with a shadow memory register 203), an integer counter 205, a remainder counter 207, a delay flip-flop 209 and a 0-64 counter 211. The LIMRX signal from the signalling filter 23 is fed into the input counter 200, which counts the number of system clock (SYSCLK) pulses between two edges of the LIMRX signal, which shall be referred to as t(in). A constant, t(s) of approximately 300 periods of SYSCLK is subtracted from the value counted by register 200. This subtraction is done to offset the addition of the equivalent number of system clock pulses in the output section (elements 205-211). The value counted in register 200 is loaded into the register 202. All except the five least significant bits of this register store the integer part (I) of the result of dividing t(in) by 64. The five least significant bits of register 202 contain the remainder (R) of this division. These values are respectively loaded into counters 205 and 207. Counter 205 counts down from its stored value to 0 at the rate of the system clock SYSCLK, and when it reaches 0, it provides an output pulse to flip-flop 209 and it increments counter 211. Flip-flop 209 delays the pulse by one clock period. Simultaneously, the output from counter 205 decrements the value in counter 207. The value I is loaded again into register 205, and the counting is repeated, until eventually register 207 reaches 0. At this point, flip-flop 209 is disabled, so that the future pulses from register 205 are passed to the output without the extra delay. The result is that the first R output pulses have lengths of I+1 clock periods and the remaining 64-R pulses have length of I clock periods. When 64 pulses have been output from counter 205, counter 211 causes the frequency multiplier to reset, and commence division of the next pulse of LIMRX by 64. As the registers 205 and 207 are dividing one pulse by 64, the counter 200 counts the length of the next pulse. If, at the end of the next pulse, counters 205 and 211 have not finished, the next pulse length is loaded into shadow register 203. This enables counter 200 to count the length of the next subsequent pulse.

Referring to Figure 6, the synchronization unit 102 is shown. This unit receives asynchronous data from the asynchronous demodulator 100 on input line 300 and receives an input system frequency clock signal of 38.4 kHz from the synchronous clock generator 106, on line 302. The synchronization unit is a digital phase-locked-loop which comprises a counter 304, an input flip-flop 306, an early/late gate 308 and an output flip-flop 310.

Counter 304 comprises a first 4-bit twisted ring counter and a second 6-bit counter. Once in every 32 counts of the 38.4 kHz input system frequency clock, the counter 304 counts to seven or nine, depending on the output from early/late gate 308. For the remaining 31 counts of the second counter, it counts to eight. The early/late gate 308 samples the clock from counter 304 and determines whether the clock is too early or too late with respect to the asynchronous data. If the data arrives first at the D input of flip-flop 306, then it is clocked to gate 308 before the next pulse from counter 304, resulting in a low output from gate 308. This in turn causes the counter 304 to count to seven for the first count of the next cycle, thereby allowing it to catch up. On the other hands if the pulse from counter 304 arrives first, this is clocked through gate 308 upon arrival of the next data pulse, resulting in a high pulse on the Q output of gate 308, causing the counter 304 to count to nine for the first count of the next cycle, allowing it to drop back to the pace of the incoming data.

The counter 304 has an input for a track enable signal TRACKEN, received from flip-flop 80 of the output expand register 56 (Figure 2). When this is low, it disables the second counter of the counter 304, causing the counter 304 to output a signal for every eight counts of the input system frequency clock.

8

EP 0 396 970 A2

TRACKEN is held low when the radio is in transmit mode, thereby allowing the synchronisation unit to output a pulse every eight counts of the input system frequency clock until the radio is switched to receive mode again. When the radio is switched to receive mode, the synchronisation unit should be very nearly in synchronisation with the next received data, and requires only one or two counts of the input system frequency clock to regain synchronisation. One count of the input system frequency clock is only 26 microseconds. This may be compared with the 16 preamble bits that are required to synchronise a new signal for a first time, which at 1200 baud takes up to 13 milliseconds. This improvement in response on switching from transmit to receive results in increased probability of capture of telegrams. It would take about 30 seconds for the synchronisation unit of the present invention to drift by as much as one data bit.

The synchronous data (RXDATA) from flip-flop 310 is clocked using the output signal from counter 304 into a 16-bit shift register in the frame detect unit 104 (Figure 2). Each of the Q and $\bar{Q}$ outputs from the 16 flip-flops of the shift register is hard-wired to a series of NAND and NOR gates, collectively indicated by box 420, which are arranged to detect one of three synchronization words. One of these words is: 1 1 0 0 0 1 0 0 1 1 0 1 0 1 1 1.

A second of the three synchronization words is the complement of the above word. These two words are specified by the MPT1317 specification. The third word which the gates 420 are arranged to detect in the register 400 is a fifteen bit ZVEI frame word. The selection of the 30 appropriate frame word is carried out by signals FDO and FD1 from flip-flops 94 and 95 of output expand register 56, as follows:

| FDO | FD1 | Function |
|-----|-----|----------|
| 0 | 0 | Disabled |
| 0 | 1 | MPT 1317/1327 Traffic channel |
| 1 | 0 | MPT 1317/1327 Control channel |
| 1 | 1 | ZVEI Recommendation |

The frame detect unit can be arranged to detect other frame words. It is an advantage of gatearray technology that the circuit can easily be modified to other systems in an inexpensive manner. When one of the predetermined frame words is clocked into the shift register of the frame detector, a signal is passed to the IRQ output of the ODIE gatearray through two-way switches 113 and 114 (Figure 2), which in turn is fed to the IRQ interrupt input of the microprocessor 10, thereby informing the microprocessor that an incoming telegram has been detected, and initiating a program in the microprocessor for receipt of data.

The RXDATA data output from flip-flop 310 of Figure 6 is passed, via 2-way switch 110 to the MODAT output of the ODIE gatearray, which is input to the microprocessor. On the other hand, when PACK is high, LIMRX is routed directly to MODAT; this feature makes it possible to do all the decoding by software, including high and low speed trunking.

The first 8 flip-flops 401-408 of the shift register 400 of the frame detect unit have their Q outputs connected to the PD inputs of the 8 flip-flops 71a-71h of the bit pack unit 71 (Figure 7). In this manner, received data can be loaded 8 bits at a time into the register 71, and from there it can be clocked at high speed (max. 1 MHz) out of the gatearray onto the data bus 58, for processing by the microprocessor or other circuits of the radio. This arrangement has the advantage that the microprocessor does not need to process each individual bit, but can be released to perform other operations while the data is packed into words of 8 bits in length.

In this manner, the bit pack unit receives 8 bits from the modem 52 and then generates an interrupt. These 8 bits can be read from the input expand register 54. The first bit read from the synchronous bus 18 is the last bit received from the modem.

There are 4 control signals to the bit pack unit. These are as follows:

PACK - when PACK is "high" the bit pack unit is generating an interrupt for every 8 bits received. On the rising edge of the PACK signal, the bit counter will be reset in order to start receiving the byte.

FRDb - on the falling edge of the frame detect (FRDb) signal, the bit counter will be reset. If the PACK bit is already high, the bit pack unit is initiated to receive the next byte after the frame.

CSIb - a falling edge of the CSI signal with clear the interrupt if the PACK signal is high.

After receiving an interrupt from the bit pack unit, it is necessary to fetch the byte within 6.5 milliseconds. The interrupt can be cleared without fetching the byte.

The bit pack unit can be used as an external timer on 6.67 milliseconds. The conditions are PACK = high, FTO = FT1 = TRACKEN = low. For every interrupt received on the IRQ line, the CSI pin has to go low to clear the interrupt within 6.67 milliseconds. The time between two successive falling edges on the

9

IRQ signal is constant at 6.67 milliseconds. To reset the timer, clear and set pack bit. The timer starts on the rising edge of the CSO signal.

While the invention has been described with regard to a gatearray, integrated as a discrete circuit, such as of the type HCA62A25 macrocell array manufactured by Motorola Inc., it will be understood that it is an advantage of the invention that it provides a circuit which can, as a natural progression, be further integrated, such as by integration in the same package as the microprocessor 10, the SNIF gatearray 17, both of these circuits, or one or more of the other circuits making up the overall radio.

**Claims**

1. A radio transceiver comprising first means for synchronising transmission timing to the timing of received radio signals and second means for synchronising the first means to a clock during periods between said received radio signals, thereby to facilitate synchronisation of the first means to the next radio signal to be received.

2. A transceiver according to claim 1, wherein the first means comprises a phase-locked-loop.

3. A transceiver according to claim 2, wherein the phase-locked-loop comprises clock means and an early/late gate for comparing the time of arrival of a received signal with the time of a pulse from the clock means and means responsive to the early/late gate for advancing or retarding at least one subsequent pulse from the clock means.

4. A transceiver according to claim 3, wherein the second means comprises means for disabling the means for advancing or retarding the clock pulses, thereby allowing the clock means to generate clock pulses at a predetermined rate.

5. A transceiver according to claim 4, wherein the second means enables the means for advancing or retarding the clock pulses again when a predetermined bit sequence is received.

6. A digital hardware gatearray for a radio transceiver, comprising digital frame detection circuitry for detecting a received signal frame, digital synchronisation circuitry for synchronising the timing of operations of the gatearray to the received signal and digital demodulation circuitry for demodulating the received signal to provide a demodulated digital signal.

7. A radio transceiver comprising the digital hardware gatearray of claim 6, the radio further comprising a programmable processor arranged to receive the demodulated signal for processing thereof.

8. A digital frequency multiplier for multiplying the frequency of a digital signal by an integer number (N), comprising a pulse length counter for measuring the time (T) between two transitions of the signal in terms of pulses of a clock, means for dividing the measured time by the integer number (N), means for storing a digital representation of the integer part (I) of the result of the division, means for storing a digital representation of the remainder part (R) of the result, and means for generating N output pulses having a total duration equal to T by generating R pulses, each having a length of I + 1 pulses of the clock, and N-R pulses, each having a length of I pulses of the clock.

9. A digital frequency multiplier according to claim 8, wherein the integer number (N) is a power of two and the means for measuring the time T and dividing it by the integer number (N) comprises a binary counter, wherein higher order bits from the counter, representing the integer part (I) of the division are stored in a first memory register, and lower order bits, representing the remainder part (R) of the division are stored in a second memory register.

10. A digital frequency multiplier according to claim 9, wherein, when a time T has been measured, said means for generating N output pulses generates pulses of length I + 1 and wherein means are provided for decrementing the value stored in the second order register for each such pulse generated, and wherein the means for generating the output pulses generates pulses of length I when the value in the second register is zero, until a total of N pulses have been generated.

11. A digital frequency multiplier according to any one of claims 8 to 10, further comprising means for generating N pulses of equal length, delay means for increasing the length of said pulses by one pulse of said clock and means for activating said delay means for R output pulses and deactivating said delay means for N-R output pulses.

12. A demodulator for demodulating an FSK signal, comprising a frequency multiplier according to any one of claims 8 to 11 for multiplying the FSK signal by a factor of at least two, and further comprising clock means for providing counting intervals substantially shorter than one period of the frequency multiplied signal, counting means for counting the number of said intervals per period of said signal, means for determining whether the number of said intervals per period exceeds a predetermined number or is less than a predetermined number, and means for providing a data output signal according to said determination.

13. A demodulator according to claim 12, further comprising one-shot circuitry for generating, for each period of the frequency multiplied signal, a pulse which remains in one logic state for a predetermined period of time, and an up-down counter for counting up during first logic state periods and down during second logic state periods of said pulses from the one-shot circuitry

14. A radio comprising:

a first part, a second part and screening means providing radio isolation between said parts, the first part comprising a processor device and at least one discrete circuit, and the second part comprising radio circuitry;

at least one data transfer line for transferring data between the processor device, said discrete circuit and the second part of the radio, the radio circuitry of the second part being sensitive to transfer of data on said data transfer line;

control input means for enabling a user of the radio to control the operation thereof, said control input means being connected to the discrete circuit for communication with the processor device through the discrete circuit,

the discrete circuit comprising means for monitoring the control input means and informing the processor device that a change in the control input means has occurred and

the processor device having means for extracting data from the discrete circuit via said at least one data transfer line only when so informed, whereby the data transfer line is inactive at other times, so as not to interfere with the radio circuitry.

FIG.1

EP 0 396 970 A2

*FIG.2*

EP 0 396 970 A2

# FIG.3

EVENT

74
76
73
73
72
70
69
68
61
60
72
72
72
72

PTT
TSR
KEY LOAD
C1

# FIG.4

LIMRX

| 120 | RXMULT | 122 | 124 | 126 |

X 64 → ONE-SHOT → DIGITAL LOW PASS FILTER 600 Hz → COMPARATOR

*FIG.4*

EP 0 396 970 A2

# FIG.5

$t_S$

LIMRX

$t$ (IN)

INPUT COUNTER — 200

RESET

203

R    MEMORY REGISTER    I — 202

0-64 COUNTER

SYSCLK

INTEGER COUNTER — 205

211

209

DELAY F/F → RXMULT

REMAINDER COUNTER R

207

# FIG.7

FD1  FD1

RX
DATA

401 402 · · · 407 408 409 410 · · · 415 416

420

FROM
DETECT

400

71A 71B · · · 71G 71H

DATA

71

CLOCK

# FIG.6

Q413  Q409  Q410

RX
DATA

ASYNC
DATA

D Q    CK    D Q

CK     Q D   CK

306    308   310

INPUT
SYSTEM
FREQUENCY

CK  COUNTERS

TO CLOCK
OF FRAME
DETECT

TRACK EN

304

EP 0 396 970 A2